**Europäisches Patentamt**

**European Patent Office**

**Office européen des brevets**

(11) Publication number : **0 577 420 A1**

# (12) EUROPEAN PATENT APPLICATION

(21) Application number : **93305165.8**

(22) Date of filing : **01.07.93**

(51) Int. Cl.$^5$ : **H01M 8/12**

(30) Priority : **01.07.92 US 907089**

(43) Date of publication of application :
**05.01.94 Bulletin 94/01**

(84) Designated Contracting States :
**BE DE FR GB IT NL SE**

(71) Applicant : **WESTINGHOUSE ELECTRIC CORPORATION**
**Westinghouse Building Gateway Center**
**Pittsburgh Pennsylvania 15222 (US)**

(72) Inventor : **Singh, Frabhakar**
**2227 Woodmont Drive**
**Export, PA 15632 (US)**
Inventor : **Ruka, Roswell John**
**51 Churchill Road**
**Pittsburgh, PA 15235 (US)**
Inventor : **Bratton, Raymond Joseph**
**445 Manor Road**
**Delmont, PA 15626 (US)**
Inventor : **Kuo, Lewis Jen-Hu**
**3907 Stonecliffe Drive**
**Monroeville, PA 15146 (US)**

(74) Representative : **van Berlyn, Ronald Gilbert**
**23, Centre Heights**
**London NW3 6JG (GB)**

(54) **A fuel cell containing stable air electrode material.**

(57)    A tubular fuel cell (1) is made, containing a tubular, inner air electrode (3), a solid electrolyte (4), substantially surrounding the air electrode, and a porous outer fuel electrode (7), where the solid electrolyte and fuel electrode are discontinuous and have inclusion of an electrical interconnection material (6), where the air electrode (3) is a material selected from $La_xCa_yMnO_3$, where x has a value from .60 to .72 and y has a value from .28 to .40, or $La_xCa_yCr_zMn_{1-z}O_3$, where x has a value from .60 to .72, y has a value from .18 to .40, and z has a value from .05 to .15 and where a plurality of fuel cells can be electrically connected together.

FIG. I

High temperature, solid oxide electrolyte fuel cell configurations, and fuel cell generators, are well known in the art. The air electrode of the fuel cell can be comprised of doped or undoped oxides or mixtures of oxides in the pervoskite family, such as $LaMnO_3$, $CaMnO_3$, $LaCoO_3$, $LaCrO_3$, and the like. Generally surrounding the outer periphery of the air electrode is a gas tight, solid electrolyte, usually of yttria stabilized zirconia. Substantially surrounding the solid electrolyte is an outer, porous, fuel electrode, usually of nickel-zirconia cermet. Both the solid electrolyte and outer electrode are discontinuous to allow inclusion of an electrical interconnection material for series connection between cells. A separate, single, open end, thin, oxidant injector tube is used in the interior of each fuel cell, to flow gaseous oxidant into the cell to contact the inside of the air electrode.

Many improvements have been made to the air electrode for the fuel cell. In U.S. Patent Specification No. 4,562,124 (Ruka), a small amount of cerium was added to the air electrode material to provide a better match of coefficient of thermal expansion with a calcia stabilized zirconia support tube upon which the air electrode was deposited. The air electrode compositions include materials of the chemical formula $La_{1-x-w}Ca_xCe_w(M)_{1-y}O_3$ where M = Mn, Cr or their mixtures; y = O; W = about .05 to 0.25; and x+w = about 0.1 to 0.7. Such materials could include, for example: $La_{.75}Ca_{.2}Ce_{.05}Cr_{.1}Mn_{.9}O_3$; $La_{.75}Ca_{.2}Ce_{.05}CrMnO_3$; $La_{.8}Ca_{.15}Ce_{.05}CrMnO_3$; and the like, with Ce as an essential component.

In U.S. Patent Specification No. 4,197,362 (Schmidberger et al.), a high conductivity, stable, gas impervious interconnection material, also useful for electrodes in oxygen probes and waste gas sensors was taught, having the compositions: $La_{.5}Ca_{.5}MnO_3$; $La_{.8}Ba_{.2}MnO_3$; $La_{.8}Ba_{.2}Cr_{.2}Mn_{.8}O_3$; and $La_{.5}Sr_{.5}Mno_3$. In U.S. Patent Specification No. 4,645,622 (Kock), a low resistive electrode for vapor phase electrolysis or high temperature fuel cell operation was taught, having the chemical formula $La_xCa_yMnO_3$, where x = .44 to .48 and y = .42 to .50. Materials having higher values for x, for example, $La_{.66}Ca_{.46}MnO_3$ were taught as not desirable, having very low conductivities.

During thermal cycling, tubular, solid oxide electrolyte fuel cells containing air electrodes of Sr doped $LaMnO_3$, for example, $La_{.9}Sr_{.1}MnO_3$, have cracked occasionally on lowering temperatures to between 650°C and 800°C, from operating temperatures of from 900°C to 1200°C. What is needed is an air electrode which does not exhibit isothermal dimensional shrinkage after isothermal or thermal cyclic conditions.

It is one of the objects of this invention to provide a more thermally stable air electrode for solid oxide tubular fuel cells.

Accordingly, the invention resides in a tubular fuel cell comprising a porous tubular inner air electrode, a gas tight solid electrolyte substantially surrounding the outer periphery of the air electrode, and a porous outer fuel electrode substantially surrounding the solid electrolyte, where the solid electrolyte and fuel electrode are discontinuous and have inclusion of an electrical interconnection material disposed on the air electrode in the discontinuity of the electrolyte, characterized in that the air electrode is a material selected from the group consisting of the composition $La_xCa_yMnO_3$, where x has a value from .60 to .72 and y has a value from .28 to .40, and the composition $La_xCa_yCr_zMn_{1-z}O_3$, where x has a value from .60 to .72, y has a value from .18 to .40, and z has a value from .05 to .15.

Use of these narrow ranges of component elements are critical in preventing any appreciable permanent shrinkage of fuel cell air electrodes on temperature cycling from 1000°C to 800°C and back, as shown in a comparison of following Tables I and II. It was found that a lanthanum manganite air electrode material containing stoichiometric oxygen showed little or no dimensional change. Oxygen stoichiometry in the lanthanum manganite air electrode material can be achieved by doping with sufficient calcium, from 28 atom % to 40 atom % of the lanthanum, to give $La_{.60-.72}Ca_{.28-.40}MnO_3$. An alternative modification of the lanthanum manganite air electrode material is to replace part of the manganese by chromium, allowing a lower range of Ca doping to from 18 atom % to 40 atom %, to give a material having the composition $La_{.60-.72}Ca_{.18-.40}Cr_{.05-.15}Mn_{.85-.95}O_3$. In both cases, the air electrode should be below 40% porous.

In order that the invention can be more clearly understood, convenient embodiments thereof will now be described, by way of example, with reference to the accompanying drawings, in which:

Figure 1, which best shows the invention, is a schematic view in section of a fuel cell containing the new air electrode material;

Figure 2, is a diagram showing total shrinkage for heat cycled $La_{.70}Ca_{.20}Cr_{.125}Mn_{.875}O_3$;

Figure 3, is a diagram showing total shrinkage for heat cycled $La_{.70}Ca_{.20}Cr_{.10}Mn_{.903}O_3$;

Figure 4, is a diagram showing total shrinkage for heat cycled $La_{.70}Ca_{.30}MnO_3$;

Figure 5, is a diagram showing total shrinkage for heat cycled comparison material $La_{.70}Ca_{.20}Mn_{.20}$;

Figure 6, is a diagram showing total shrinkage for heat cycled comparison material $La_{.75}Ca_{.25}MnO_3$;

Figure 7, is a diagram showing total shrinkage for heat cycled comparison material $La_{.80}Ca_{.20}MnO_3$; and

Figure 8, is a diagram showing total shrinkage for heat cycled comparison material $La_{.90}Sr_{.10}MnO_3/_{10}$ wt.% $ZrO_2$.

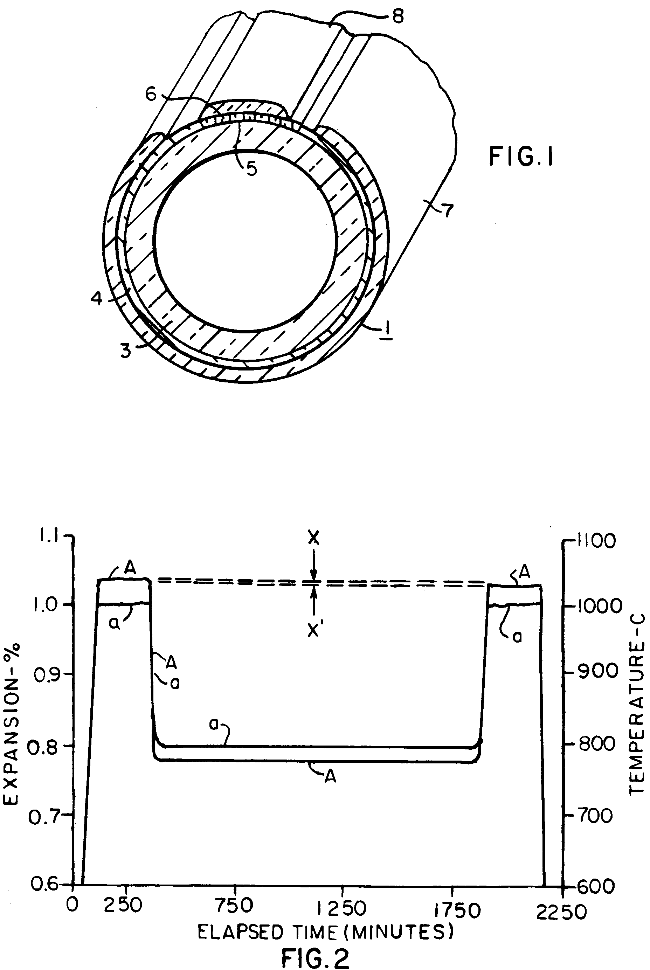

Referring now to Figure 1, fuel cell 1 is shown. Porous, self supporting air electrode or cathode is shown as 3. The cathode 3 is typically 1 millimeter to 3 millimeters thick and can be extruded or isostatically pressed to shape and then sintered. An optional stabilized zirconia support tube, not shown, can be used, if necessary, to support the air electrode. Over the air electrode is a gas-tight, dense, solid electrolyte 4, typically yttria stabilized zirconia, about 1 micrometer to about 100 micrometers thick.

A selected longitudinal segment 5 along the axial length of the cell is masked during deposition of the electrolyte and an interconnect material 6 is deposited on segment 5. The interconnect material 6 must be electronically conductive in both an oxygen and fuel environment. The interconnect is about 5 micrometers to about 100 micrometers thick and is typically made of dense lanthanum chromite doped with calcium, strontium, or magnesium. Surrounding the remainder of the cell except for the interconnect area is a fuel electrode 7 which functions as the anode. A typical anode is made of a metal ceramic (cermet) material and is about 30 micrometers to 100 micrometers thick. A coating material 8, which is of the same composition as the anode, can also be deposited over the interconnect 6. This material is typically nickel zirconia cermet and is about 50 micrometers to 100 micrometers thick.

In operation, a gaseous fuel, such as hydrogen or carbon monoxide, is directed over the outside of the cell, and a source of oxygen passes through the inside of the cell. The oxygen source forms oxygen ions at the air electrode-electrolyte interface, which migrate through the electrolyte material to the anode while electrons are collected at the cathode, thus generating a flow of electrical current in an external load circuit. A plurality of similar cells can be electrically connected by contact between the interconnect of one cell and the anode of another cell.

The porous air electrode remains exposed to the oxidant gas atmosphere, usually air, during generator operation, and oxygen reduction takes place at the air electrode-electrolyte interface. In the tubular cell configuration, the air electrode maintains intimate contact with the porous support tube when used, dense electrolyte, and dense interconnection film. Structural stability of the air electrode is an important requirement for maintaining long term mechanical integrity necessary for successful operation of the cell.

The cell length and the air electrode length usually range from 50 cm. to 230 cm. If air electrode length was 100 cm, the total heat shrinkage of even 0.05% in a 100 cm. length of porous air electrode in contact with dense electrolyte and interconnection would result in a 1/2 mm. difference in length between air electrode, electrolyte, and interconnection and would result in severe stresses between the materials. A marginal total heat shrinkage value would be from 0.03% to 0.04%, and long life commercially acceptable values are thought to be below about 0.02%. All components of the cell remain, under operating conditions, stable to shrinkage under isothermal conditions except the air electrode which has a tendency to shrink when subjected to certain thermal cycling conditions. This tendency to shrink translates into stresses between the air electrode and adjoining components and in some cases can result in cracking failure of individual cells, hampering operation of a multicell generator.

The air electrode 3 of this invention has a general formula consisting of $La_xCa_yCr_zMn_{1-z}O_3$, where x has a value from 0.60 to 0.72, y has a value from 0.28 to 0.40, and z has a value from 0 to 0.15. To this material, from 1 weight % to 12 weight % of $ZrO_2$ can be added when a calcia stabilized zirconia support tube is used, if necessary, to help bonding to the tube.

Thus, the air electrode can have the chemical formula: $La_{.60-.72}Ca_{.28-.40}MnO_3$ when Cr is not a component. The increased Ca doping makes the material less sensitive to accelerated shrinkage during cooling of the generator, which might occur during processing steps, operational malfunctions or special operational procedures.

Addition of Cr, however, in small amounts, helps to prevent oxygen loss at low oxygen pressures sometimes encountered during processing procedures, such as inter-connection or electrolyte deposition at 1200°C to 1400°C. Chromium when added is preferably within the range of z in the general formula of from .05 to 0.15. With Cr inclusion, the air electrode can have the chemical formula: $La_{.60-.72}Ca_{.18-.40}Cr_{.05-.15}Mn_{.85-.95}O_3$. Thus, the range of Ca can be lowered 10 atom % when Cr is added over 5 atom %. Inclusion of Cr for a value of z less than 0.05 will not appreciably enhance air electrode properties. The air electrode, to be useful in the fuel cell will be from about 20% porous to 40% porous (60% to 80% of theoretical density) preferably, from 20% porous to 35% porous (60% to 75% of theoretical density). The electrolyte and interconnection are both about 98% to 100% of theoretical density.

The following Examples further illustrate the invention and should not be considered limiting.


EXAMPLE 1


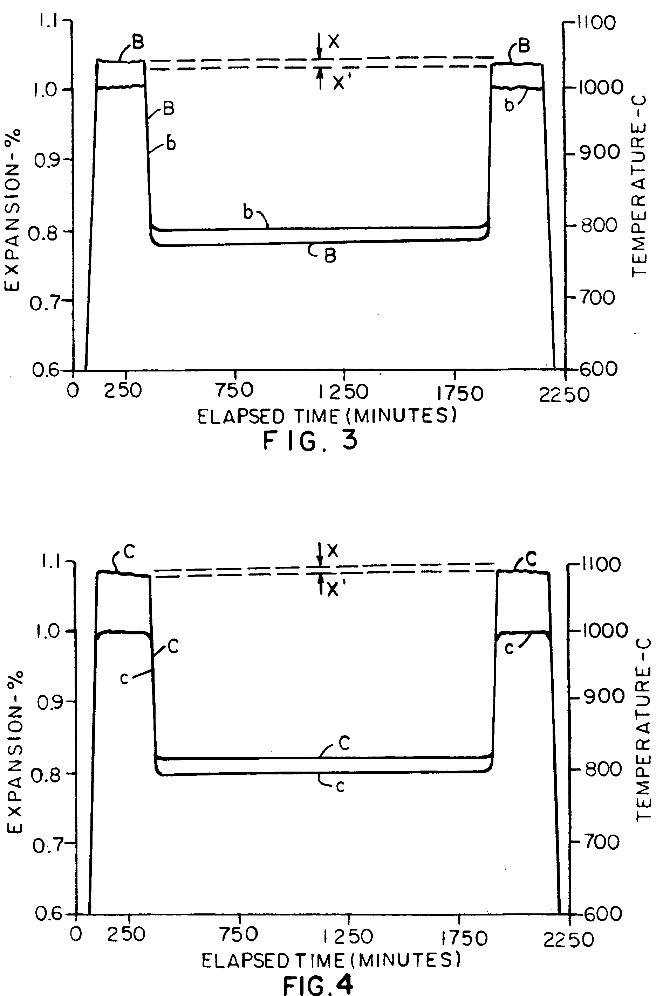

Sample test bars 2.54 cm. long, 0.635 cm. thick by 0.635 cm. wide were tested for dimensional stability during cycling from 25°C to 1000°C and holding for 4 hours, followed by dropping the temperature to 800°C and holding for 24 hours, followed by raising the temperature to 1000°C again and holding for 4 hours. Testing equipment was a Theta Industries, Dilatronic dilatometer. Individual dried oxide powders were mixed in exact proportions to provide the sample compositions desired, and the mixed powder was sintered in air at from 1400°C to 1450°C to provide 30% to 35% porous air electrode material. Results of the tests are following in Table I and in Figures 2, 3 and 4:

### TABLE I

| Sample Composition* | Initial Temp. & Hold | mediate Temp. & Hold | Final Temp. & Hold | Inter-Final Shrinkage at 1000°C | Figure |
|---|---|---|---|---|---|
| A) $La_{.70}Ca_{.20}Cr_{.125}Mn_{.875}O_3$ | 1000°C 4 hrs. | 800°C 24 hrs. | 1000°C 4 hrs. | < .01% | 2 |
| B) $La_{.70}Ca_{.20}Cr_{.10}Mn_{.903}O_3$ | 1000°C 4 hrs. | 800°C 24 hrs. | 1000°C 4 hrs. | < .01% | 3 |
| C) $La_{.70}Ca_{.30}MnO_3$ | 1000°C 4 hrs. | 800°C 24 hrs. | 1000°C 4 hrs. | < .01% | 4 |

*Sample Compositions subject to ± .015 variation maximum

In the Figures, the capital letter, for example A, shows the expansion curve and the small letter, for example a, shows the temperature curve. Thus, temperature curve a proceeds up to 1000°C, holds; drops to 800°C, holds; is raised to 1000°C and again holds. The final shrinkage is determined as the difference between peaks on the expansion curve, for example, A, at a temperature of 1000°C,- shown as X-X'. It is also desirable that only minor expansion or contraction take place at 800°C, that is, the bottom expansion curve should be relatively flat, as shown in Figures 2, 3 and 4. These three compositions provide excellent candidates for air electrodes in high temperature fuel cells subject to thermal cycling.

### EXAMPLE II

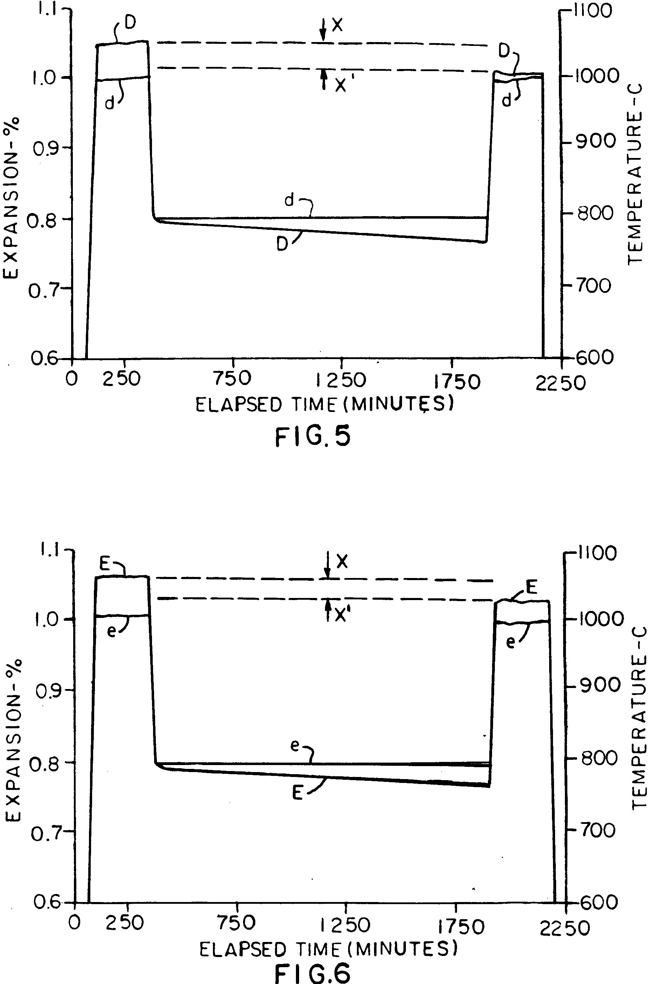

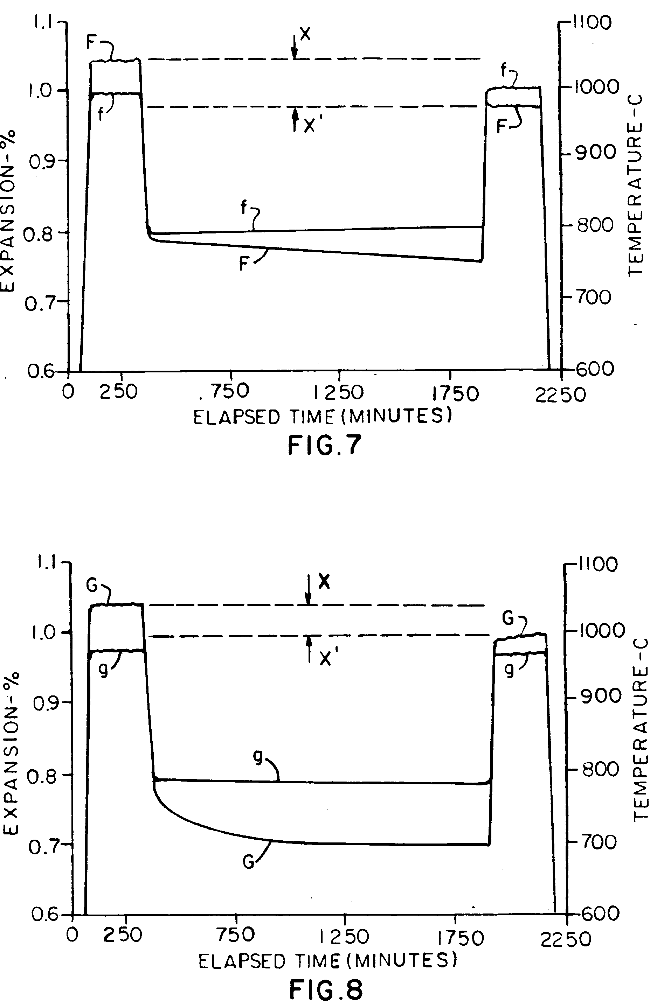

This is a Comparative Example, comparing similar test bars tested the same as in Example I but with different compositions, except Sample G, was a tube 2.54 cm. long, 1 mm. thick, and 1.27 cm. inside diameter. All these samples were also 30% to 35% porous, except Sample F was 45% porous, made similarly as in Example I. Results of the tests are shown following in Table II and in Figures 5, 6 and 7:

### TABLE II

| Comparative Sample Composition* | Initial Temp. & Hold | Inter-mediate Temp. & Hold | Final Temp. & Hold | Final Shrinkage at 1000°C | Figure |
|---|---|---|---|---|---|
| D) $La_{.70}Ca_{.20}MnO_3$ | 1000°C 4 hrs. | 800°C 24 hrs. | 1000°C 4 hrs. | ≈ .05% | 5 |
| E) $La_{.75}Ca_{.25}MnO_3$ | 1000°C 4 hrs. | 800°C 24 hrs. | 1000°C 4 hrs. | ≈ .03%6 | 6 |
| F) $La_{.80}Ca_{.20}MnO_3$ | 1000°C 4 hrs. | 800°C 24 hrs. | 1000°C 4 hrs. | ≈ .12% | 7 |
| G) $La_{.90}Sr_{.10}MnO_3$ + 10 wt.% $ZrO_2$ | 1000°C 4 hrs. | 800°C 24 hrs. | 1000°C 4 hrs. | ≈ .04% | 8 |

*Sample Compositions subject to ± .015 variation maximum

These small % shrinkage values translate into very substantial stress upon temperature cycling for air electrodes used in 50 cm. to 230 cm. long fuel cell tubes, where, as pointed out previously, long life, commercially acceptable values are thought to be below about 0.02%. Sample F had a very large shrinkage showing the disadvantage of its high porosity of 45%. A comparison of final shrinkage values of this Example with the less than 0.01% values of the Table I materials shows the dramatic advantage of the sample compositions of Table I.

## Claims

1.  A tubular fuel cell comprising a porous tubular inner air electrode, a gas tight solid electrolyte substantially surrounding the outer periphery of the air electrode, and a porous outer fuel electrode substantially surrounding the solid electrolyte, where the solid electrolyte and fuel electrode are discontinuous and have inclusion of an electrical interconnection material disposed on the air electrode in the discontinuity of the electrolyte, characterized in that the air electrode is a material selected from the group consisting of the composition $La_xCa_yMnO_3$, where x has a value from .60 to .72 and y has a value from .28 to .40, and the composition $La_xCa_yCr_zMn_{1-z}O_3$, where x has a value from .60 to .72, y has a value from .18 to .40 and z has a value from .05 to .15.

2.  The fuel cell of claim 1, characterized in that the air electrode composition is $La_xCa_yMnO_3$, where x has a value from .60 to .72 and y has a value from .28 to .40.

3.  The fuel cell of claim 1, characterized in that the air electrode composition is $La_xC_{ay}Cr_zMn_{1-z}O_3$, where x has a value from .60 to .72, y has a value from .18 to .40, and z has a value from .05 to .15.

4.  The fuel cell of claim 1, characterized in that the air electrode is a self-supporting structure.

5.  The fuel cell of claim 1, characterized in that the air electrode is from 20% porous to 40% porous.

6.  The fuel cell of claim 1, characterized in that the air electrode is from 20% porous to 35% porous.

7.  The fuel cell of claim 1, characterized in that the interconnect is dense and made of doped lanthanum chromite, the electrolyte is dense and made of stabilized zirconia, and the fuel electrode is made of nickel zirconia cermet.

8.  The fuel cell of claim 1 electrically connected to a plurality of similar cells.

FIG.1

FIG.2

FIG. 3

FIG.4

7

FIG.5

FIG.6

FIG.7

FIG.8

EP 0 577 420 A1

European Patent
Office

# EUROPEAN SEARCH REPORT

Application Number

EP    93 30 5165
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 16, no. 431 (C-983)9 September 1992 & JP-A-04 149 023 ( CENTRAL RES INST OF ELECTRIC POWER IND ) 22 May 1992 * abstract * | 1,2 | H01M8/12 |
| Y | | 4-8 | |
| X | JP-A-04 050 155 (AGENCY OF IND SCIENCE & TECHNOL) * figure 1; examples 3,8 * | 1-3,7,8 | |
| Y | & PATENT ABSTRACTS OF JAPAN vol. 16, no. 238 (C-946)2 June 1992 * abstract * | 4-6 | |
| Y | EP-A-0 469 831 (WESTINGHOUSE ELECTRIC CORPORATION) * page 4, line 4 - line 54; claims 1,5; figure 1 * * page 5, line 6 - line 12 * | 4-8 | |
| Y | EP-A-0 451 971 (NGK INSULATORS LTD) * column 3, line 26 - line 46; claim 1; figure 1 * | 8 | TECHNICAL FIELDS SEARCHED (Int. Cl.5 ) H01M |
| X | CHEMICAL ABSTRACTS, vol. 113, no. 24, 10 December  1990, Columbus, Ohio, US; abstract no. 215315u, TSUKUDA HIROSHI ET AL 'Manufacture of electrodes especially for solid-electrolyte fuel cells' * abstract * & JP-A-02 033 860 (MITSUBISHI HEAVY INDUSTRIES, LTD) 5 February 1990 | 1,2 | |

-/--

The present search report has been drawn up for all claims

| Place of search | Date of completion of the search | Examiner |
|---|---|---|
| THE HAGUE | 14 OCTOBER 1993 | D'HONDT J.W. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)

10

European Patent
Office

**EUROPEAN SEARCH REPORT**

Application Number

EP    93 30 5165
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | JOURNAL OF THE ELECTROCHEMICAL SOCIETY vol. 138, no. 7, July 1991, MANCHESTER, NEW HAMPSHIRE US pages 1867 - 1873 JUNICHIRO MIZUSAKI ET AL 'Reaction Kinetics and Microstructure of the Solid Oxide Fuel Cells Air Electrode La0,6Ca0,4MnO3/YSZ' * abstract * * page 1868, left column, line 42 - line 50 * | 1,2,5,6 | |
| X | EP-A-0 467 590 (NGK INSULATORS) * page 2, line 11 - line 26; claim 1 * * page 2, line 36 - line 38 * * page 3, line 8 - line 12 * | 1,2,4-6 | |
| X | JP-A-01 200 560 (MITSUBISHI HEAVY IND LTD) * examples 8,9,10,12; table 1 * & PATENT ABSTRACTS OF JAPAN vol. 13, no. 496 (E-843)9 November 1989 * abstract * | 1-3 | TECHNICAL FIELDS SEARCHED (Int. Cl.5) |

The present search report has been drawn up for all claims

| Place of search | Date of completion of the search | Examiner |
|---|---|---|
| THE HAGUE | 14 OCTOBER 1993 | D'HONDT J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0408)